Europäisches Patentamt

European Patent Office

Office européen des brevets

(19)

(11) EP 0 944 025 A2

(12) EUROPÄISCHE PATENTANMELDUNG

(43) Veröffentlichungstag:
22.09.1999 Patentblatt 1999/38

(51) Int Cl.$^6$: G06T 5/00

(21) Anmeldenummer: 99200781.5

(22) Anmeldetag: 11.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 20.03.1998 DE 19812285

(71) Anmelder:
• Philips Patentverwaltung GmbH
22335 Hamburg (DE)
Benannte Vertragsstaaten:
NL
• Koninklijke Philips Electronics N.V.
5621 BA Eindhoven (NL)
Benannte Vertragsstaaten:
FR GB NL

(72) Erfinder:
• Sinkus, Ralph, Dr.
Röntgenstrasse 24, 22335 Hamburg (DE)
• Proksa, Roland
Röntgenstrasse 24, 22335 Hamburg (DE)
• Rasche, Volker, Dr.
Röntgenstrasse 24, 22335 Hamburg (DE)

(74) Vertreter: Hartmann, Heinrich, Dipl.-Ing. et al
Philips Patentverwaltung GmbH,
Röntgenstrasse 24
22335 Hamburg (DE)

(54) **Bildgebendes Verfahren und Vorrichtung für medizinische Untersuchungen**

(57)    Die Erfindung betrifft ein bildgebendes Verfahren für medizinische Untersuchungen, insbesondere MR-Untersuchungen, bei dem ein Satz von Meßwerten an im Frequenzraum (bzw. im k-Raum) ungleichmäßig verteilten Meßpunkten aquiriert wird. Bevor aus diesen Meßwerten durch eine Fourier-Transformation ein Bild im Ortsraum erzeugt wird, müssen die Meßwerte in Abhängigkeit von der Dichte der Meßpunkte im Frequenzraum gewichtet werden. Zu diesem Zweck werden die Meßwerte entsprechend der Größe der Voronoi-Zellen gewichtet.

Fig.3

**Beschreibung**

Die Erfindung betrifft ein bildgebendes Verfahren für medizinische Untersuchungen mit den Schritten

- Akquisition eines Satzes von Meßwerten an im Frequenzraum verteilten Meßpunkten,
- Wichtung der Meßwerte in Abhängigkeit von der Dichte der Meßpunkte,
- Erzeugung eines Bildes im Ortsraum durch Anwendung einer Fourier-Transformation auf die gewichteten Meßwerte des Satzes.

Ein solches Verfahren ist aus ISMRM 1996, Seite 359 für das Gebiet der MR-Untersuchungen bekannt (MR=Magnetresonanz). Bei dem bekannten Verfahren werden die gewichteten Meßwerte zunächst mit einem Gridding Kernel gefaltet, um eine schnelle Fourier-Transformation (FFT) durchführen zu können. Nach der FFT müssen dann die sich ergebenden Werte durch die Fourier-transformierte des Gridding-Kernels dividiert werden., um ein einwandfreies Bild zu erhalten.

Bei einem Verfahren, bei dem die Meßpunkte nicht äquidistant im Frequenzraum verteilt sind, ist es erforderlich, die Meßwerte in Abhängigkeit von der Dichte der Meßpunkte zu wichten (je geringer die Dichte ist, um so größer ist das Gewicht mit dem ein Meßpunkt eingeht). Die übliche Definition der Dichte als Anzahl der Meßpunkte pro Raumintervall macht bei solchen unregelmäßigen Verteilungen keinen Sinn, weil dieses Maß je nach Größe des Raumintervalls schwankt und ein infinitesimal kleines Raumintervall nicht sinnvoll betrachtet werden kann. bei dem bekannten Verfahren liegen die Meßpunkte auf einer Spirale bzw. auf mehreren Spiralarmen, und die Dichte für einen Meßpunkt wird als der Inhalt der Fläche definiert, die die Mittelsenkrechten auf die Verbindungsgeraden zu dem vorangehenden bzw. dem nachfolgenden Meßpunkt mit benachbarten Spiralarmen einschließen. Für Sequenzen vom EPI-Typ oder andere MR-Sequenzen mit einer sehr unregelmäßigen Verteilung der Meßpunkte ist dieses Verfahren nicht geeignet. Eine solche unregelmäßige Verteilung kann sich bei MR-Untersuchungen auch als Folge von Wirbelströmen oder nicht idealen Gradientenverstärkern bzw. bei Verfahren mit asymmetrischen Echos ergeben.

Es ist daher Aufgabe der vorliegenden Erfindung ein Verfahren der eingangs genannten Art so auszugestalten, daß es auch bei stark unregelmäßigen Verteilungen der Meßpunkte einwandfrei arbeitet und dementsprechend gute Bilder liefert. Diese Aufgabe wird erfindungsgemäß dadurch gelöst, daß die Wichtung der Meßwerte entsprechend der Größe der den Meßwerten zugeordneten Meßpunkte umschließenden Voronoi-Zellen erfolgt.

Die Erfindung basiert auf der Erkenntnisse, daß die Größe der Voronoi-Zellen, die die einzelnen Meßpunkte einschließen, ein nahezu optimales Maß für die Dichte der Meßpunkte im Bereich des betreffenden Meßpunktes ist. Werden daher die an den verschiedenen Meßpunkten gewonnenen Meßwerte entsprechend der Größe der Voronoi-Zellen gewichtet, dann liefert eine Fourier-Transformation der auf diese Weise gewichteten Meßwerte ein optimales Bild.

Voronoi-Zellen, die u.a. aus ACM Computing Surveys, Vol. 23, No. 3, September 1991 pp 345 bis 350 bekannt sind, sind unregelmäßige Polygone (für den Fall, daß die Meßpunkte in einem zweidimensionalen Frequenzraum verteilt sind) bzw. Polyeder (für den dreidimensionalen Fall). Die Begrenzungen dieser Voronoi-Zellen schließen alle Punkte im Frequenzraum ein, die dem betrachteten Meßpunkt näher liegen als jedem anderen Meßpunkt.

Die Erfindung ist nicht nur auf Meßpunkte im zweidimensionalen Raum sondern auch auf Meßpunktverteilungen im drei- oder höher dimensionalen Raum (z.B. dreidimensionale bildgebende Spektroskopie) anwendbar, die zu drei- oder höher dimensionalen Abbildungen führen. Der Begriff "Bild" ist daher in diesem Zusammenhang weit zu interpretieren.

Außerdem eignet sich die Erfindung nicht nur für MR-Untersuchungen sondern auch für die Röntgencomputertomographie (CT). Üblicherweise werden CT-Bilder aus den Meßwerten zwar durch Faltung (convolution) abgeleitet, doch versagt dieses Verfahren, wenn z.B. auf Grund mechanischer Instabilitäten sich die Meßwerte nicht gleichmäßig im Raum verteilen. In diesem Fall läßt sich ein CT-Bild jedoch mit einer Fourier-Transformation rekonstruieren, wofür die Meßwerte in Abhängigkeit von ihrer Dichte zu gewichten sind.

Der geringste Rechenaufwand ergibt sich bei einer Rekonstruktion der Bilder aus den Meßwerten mit Hilfe einer Schnellen Fourier-Transformation (FFT), die jedoch voraussetzt, daß die Meßwerte an den Gitterpunkten eines kartesischen Gitters vorliegen. Ein dafür geeignetes Verfahren beschreibt die Weiterbildung nach Anspruch 2.

Die Voronoi-Zellen von am Rande des Frequenzraums liegenden Meßpunkten sind nach außen hin nicht begrenzt, weil außerhalb ja keine weiteren Meßpunkte liegen. Diese Meßpunkte (die den hohen Frequenzkomponenten entsprechen) würden daher auch dann mit einem zu hohen Gewicht in die Rekonstruktion eingehen, wenn man die Begrenzung des Frequenzraum als äußere Grenze der Voronoi-Zellen heranziehen würde. Man könnte die dadurch bedingten Artefakte zwar vermeiden, in dem man das Bild nur mit Hilfe von Meßwerten rekonstruiert, deren zugeordnete Meßpunkte in vollständig geschlossenen Voronoi-Zellen liegen, doch ginge dann ein Teil der Meßwerte für die Rekonstruktion verloren. Dies läßt sich durch die in Anspruch 3 angegebene Weiterbildung der Erfindung vermeiden, die zu artefaktfreien Bildern führt.

Die Ansprüche 4 und 5 beschreiben die Anwendung des erfindungsgemäßen Verfahrens bei einem MR-Untersuchungsverfahren bzw. bei einem MR-System.

Die Erfindung wird nachstehend anhand der Zeichnungen näher erläutert. Es zeigen:

Fig. 1    Ein MR-System, bei dem die Erfindung anwendbar ist,
Fig. 2    ein Ablaufdiagramm eines erfindungsgemäßen Verfahrens,
Fig. 3    ein Voronoi-Diagramm für die Meßpunkte im Frequenzraum,
Fig. 4    einen Teil des Frequenzraums und
Fig. 5    den Faltungskernel mit dem die Meßwerte gefaltet werden.

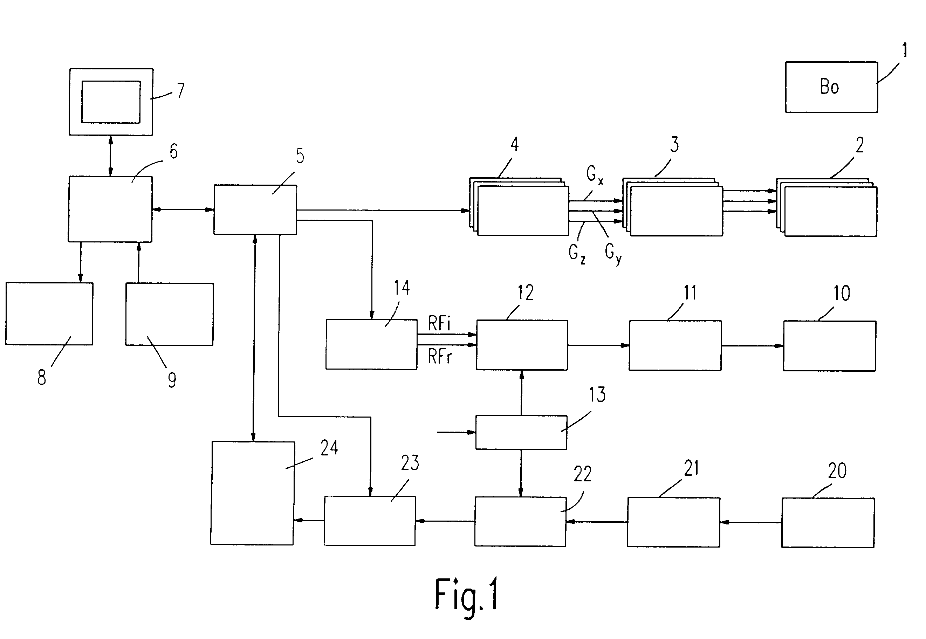

In Fig. 1 ist mit 1 ein schematisch dargestellter Hauptfeldmagnet bezeichnet, der in einem nicht näher dargestellten Untersuchungsbereich ein in z-Richtung verlaufendes stationäres und im wesentlichen homogenes Magnetfeld mit einer Stärke von z.B. 1,5 Tesla erzeugt. Die z-Richtung verläuft dabei in Längsrichtung eines nicht näher dargestellten Untersuchungstisches, auf dem sich während einer Untersuchung ein Patient befindet.

Weiterhin ist eine Gradientenspulenanordnung 2 vorgesehen, die drei Spulensysteme umfaßt, mit denen in z-Richtung verlaufende magnetische Gradientenfelder $G_x$, $G_y$ bzw. $G_z$ mit einem Gradienten in x-, y- bzw. z-Richtung erzeugt werden können. Die Ströme für die Gradientenspulenanordnung 2 werden von je einem Gradientenverstärker 3 geliefert. Ihr zeitlicher Verlauf wird von einem Waveform-Generator 4 vorgegeben, und zwar für jede Richtung gesondert. Der Waveform-Generator 4 wird von einer Rechen- und Steuereinheit 5 gesteuert, die den für ein bestimmtes Untersuchungsverfahren erforderlichen zeitlichen Verlauf der magnetischen Gradientenfelder $G_x$, $G_y$, $G_z$ berechnet und in den Waveform-Generator 4 lädt. Bei der MR-Untersuchung werden diese Signale aus dem Waveform-Generator 4 ausgelesen und der Gradientenverstärkeranordnung 3 zugeführt, die daraus die für die Gradientenspulenanordnung 2 erforderlichen Ströme erzeugt.

Die Steuereinheit 5 wirkt außerdem noch mit einer Work-Station 6 zusammen, die mit einem Monitor 7 zur Wiedergabe von MR-Bildern versehen ist. Über eine Tastatur 8 oder eine interaktive Eingabeeinheit 9 sind Eingaben möglich.

Die Kernmagnetisierung im Untersuchungsbereich kann durch Hochfrequenzimpulse einer Hochfrequenzspule 10 angeregt werden, die an einen Hochfrequenzverstärker 11 angeschlossen ist, der die Ausgangssignale eines Hochfrequenzsenders 12 verstärkt. In dem Hochfrequenzsender 12 werden die (komplexen) Einhüllenden der Hochfrequenzimpulse mit den von einem Oszillator 13 gelieferten Trägerschwingungen moduliert, deren Frequenz der Larmor-Frequenz (bei einem Hauptmagnetfeld von 1,5 Tesla ca. 63 MHz) entspricht. Die komplexe Einhüllende wird von der Rechen- und Steuereinheit in einen Generator 14 geladen, der mit dem Sender 12 gekoppelt ist.

Die im Untersuchungsbereich erzeugten MR-Signale werden von einer Empfangsspule 20 aufgenommen und von einem Verstärker 21 verstärkt. Das verstärkte MR-Signal wird in einem Quadratur-Demodulator 22 durch zwei um 90° gegeneinander versetzte Trägerschwingungen des Oszillators 13 demoduliert, so daß zwei Signale erzeugt werden, die als Realteil und als Imaginärteil eines komplexen MR-Signals aufgefaßt werden können. Aus diesen MR-Signalen wird nach Umsetzung in diskrete Digitalwerte mittels des Analog-Digitalwandlers 23 mit einer Bildverarbeitungseinheit 24 ein MR-Bild (oder mehrere) rekonstruiert. Diese MR-Bilder werden auf dem Monitor 7 wiedergegeben.

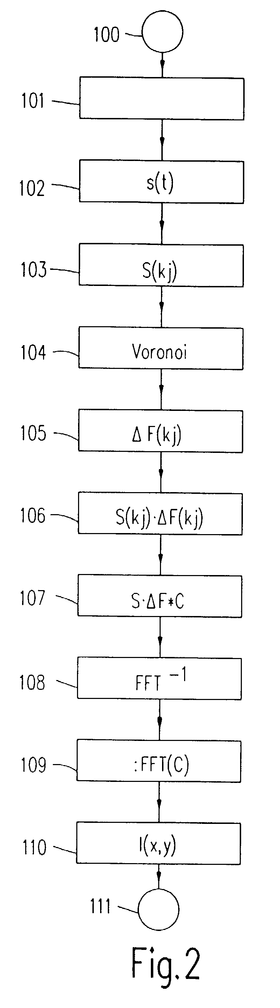

Der Ablauf des MR-Verfahrens ist in Fig. 2 dargestellt. Nach der Initialisierung (100) wird die Kernmagnetisierung durch eine Sequenz (101) angeregt, bei der neben dem stationären Magnetfeld des Hauptfeldmagneten 1 mindestens ein Hochfrequenzimpuls eines hochfrequenten Magnetfeldes und ein oder mehrere magnetische Gradientenfelder $G_x$, $G_y$, bzw. $G_z$ auf den Untersuchungsbereich einwirken in dem sich der Patient befindet.

Als Folge dieser Anregung der Kernmagnetisierung entsteht im Untersuchungsbereich ein MR-Signal s(t), das im Schritt 102 von den Komponenten 20...23 des MR-Systems empfangen und digitalisiert wird. Im Schritt 103 wird das MR-Signal einer (eindimensionalen) Fourier-Transformation unterzogen, aus der die Meßwerte $S(k_j)$ resultieren, die die Kernmagnetisierung im k-Raum (als k-Raum wird in der MR-Fachwelt der Frequenzraum bezeichnet) an den Meßpunkten $k_j$ darstellt. Die Schritte 101...103 werden erforderlichenfalls mit geänderten Parametern sooft wiederholt, bis die Meßwerte $S(k_j)$ an einer für die Bildrekonstruktion ausreichenden Anzahl von Meßpunkten $k_j$ zur Verfügung stehen. Wichtig ist dabei, daß neben den Meßwerten $S(k_j)$ auch die Meßpunkte $k_j$ bekannt sind.

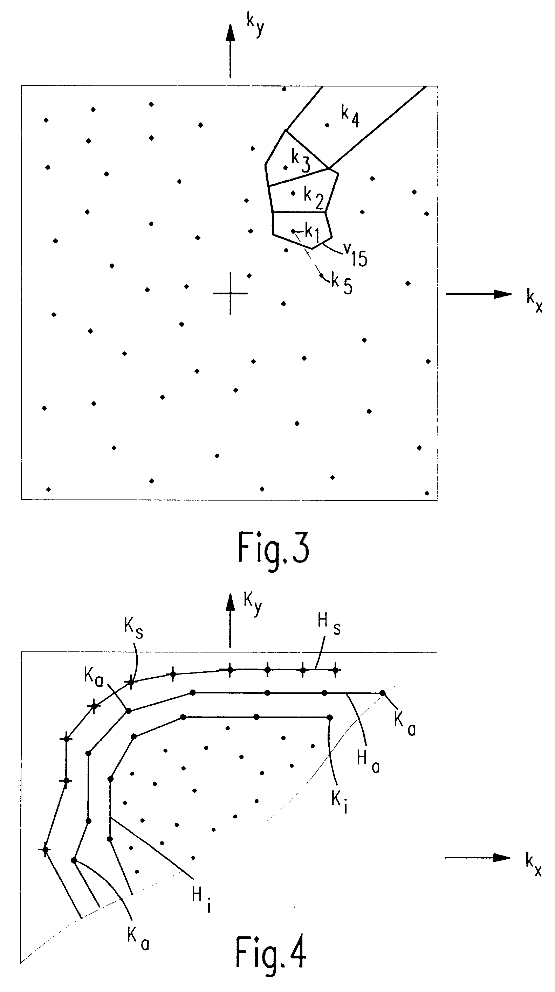

Im nächsten Schritt wird entsprechend den sich aus den Schritten 101...103 ergebenden Meßpunkten kj für den Teil des Frequenzraums der zu dem zu erzeugenden MR-Bild beitragen soll, ein Voronoi-Diagramm erstellt, d.h. es werden zu allen Meßpunkten, die den betreffenden Meßpunkt umschließenden Voronoi-Zellen (104) ermittelt. Dies wird anhand der Fig. 3 erläutert, die die Voronoi-Zellen von einigen Meßpunkten $k_1$, $k_2$, $k_3$ und $k_4$ darstellt. Die Meßpunkte sind in Fig. 3 als Punkte dargestellt, während die Voronoi-Zellen (und die Umrandung des Frequenzraums) hinausgezogenen Linien dargestellt sind.

Die Voronoi-Zellen sind unregelmäßige Polygone, zu denen - je nach der Konfiguration, der in der Nähe befindlichen Meßpunkte - eine unterschiedliche Anzahl von Seiten gehören kann. Jede Seite einer Voronoi-Zelle ist ein Stück einer Mittelsenkrechten auf die Verbindungsgerade zweier Meßpunkte. Dies ist in Fig. 3 anhand der Seite

$v_{15}$ zwischen den Punkten $k_1$ und $k_5$ dargestellt. Das zu der Voronoi-Zelle gehörenden Stück der Mittelsenkrechten endet jeweils da, wo es von anderen Mittelsenkrechten geschnitten wird. Alle Punkte auf einer Seite einer Voronoi-Zelle haben den gleichen Abstand von zwei Meßpunkten (z.B. $k_1$ und $k_5$). Alle Eckpunkte der Voronoi-Zellen haben von wenigstens drei Meßpunkten den gleichen Abstand. Alle Punkte einer Voronoi-Zelle haben von den darin befindlichen Meßpunkt einen geringeren Abstand als von irgendeinem anderen Meßpunkt.

Aus dem Vorherigen ergibt sich, daß die Voronoi-Zellen um so kleiner sind, je dichter die Meßpunkte beieinanderliegen, d.h. die Größe der Voronoi-Zellen (ihr Flächeninhalt) ist ein geeignetes Maß für die Dichte der Meßpunkte. Es ergibt sich daher eine optimale Rekonstruktion, wenn jeder Meßwert $S(k_j)$ mit der Fläche $\Delta F(k_j)$ der Voronoi-Zelle gewichtet wird, die den zu diesem Meßwert gehörenden Meßpunkt $k_j$ umschließt.

Allerdings zeigt Fig. 3 auch, daß die Zelle für den am Rand liegenden Meßpunkt $k_4$ unverhältnismäßig groß ist. Ähnliches würde sich auch für die anderen Meßpunkte am Rande ergeben, die die hohen Ortfrequenzkomponenten darstellen. Dies ist darauf zurückzuführen, daß diese Zellen nach außen hin nur durch die Grenzen des k-Raums begrenzt sind. Um zu vermeiden, daß die Meßwerte an diesen Rändern des k-Raums mit einem zu großen Gewicht in die Rekonstruktion eingehen - was zu deutlich sichtbaren Bildartefakten führen würde - ist es daher nötig, auch für die diese Meßpunkte umschließenden Zellen Grenzen zu finden, in der Weise, daß die Fläche dieser Zellen ein gutes Maß für die Dichte der Meßpunkte in diesem Bereich ist.

Eine Möglichkeit dafür ist in Fig. 4 angedeutet, die einen Teilbereich des k-Raums darstellt. Die am Rande liegenden Meßpunkte sind mit $k_a$ bezeichnet. Verbindet man diese Meßpunkte über Geraden miteinander, dann entsteht eine Hülle $H_a$, die alle anderen Meßpunkte einschließt. Die Fläche dieser Hülle sei $F_a$. Denkt man sich nun alle am Rande liegenden Meßpunkte $k_a$ weg, dann werden die ihnen benachbarten Meßpunkte $k_i$ zu Randpunkten, und die sie verbindenden Geraden bilden eine Hülle $H_i$, die alle anderen Meßpunkte einschließt. Bezeichnet man deren Fläche mit $F_i$, dann läßt sich ein Faktor $\alpha$ definieren, gemäß

$$\alpha = \sqrt{F_a/F_b} \tag{1}$$

Dehnt man nun die äußere Hülle $H_a$ entsprechend dem Faktor $\alpha$ aus (bezogen auf den Flächenschwerpunkt dieser Hülle), dann ergibt sich eine synthetische Hülle $H_s$ mit synthetischen Abtastpunkten $k_s$, die zur Extrapolation der äußeren Begrenzung der Voronoi-Zellen für die Meßpunkte am Rande herangezogen werden können.

Nachdem auf diese Weise für sämtliche Meßpunkte eine Voronoi-Zelle gebildet worden ist, werden im Schritt 105 die Flächen dieser Zellen berechnet, und im Schritt 106 wird der Meßwert $S(k_j)$ mit $\Delta F(k_j)$ gewichtet.

Grundsätzlich könnte man bereits anhand der auf diese Weise gewonnenen gewichteten MR-Meßwerte durch eine diskrete Fourier-Transformation ein MR-Bild erzeugen. Der dafür erforderliche Rechenaufwand ist jedoch relativ hoch. Er läßt sich erheblich reduzieren, wenn das MR-Bild aus einer Schnellen Fourier-Transformation (FFT) gewonnen wird. Dafür muß man die Kernmagnetisierungsverteilung jedoch an Abtastpunkten kennen, die gleichmäßig im k-Raum verteilt sind. Die hierzu erforderliche Umrechnung auf die Gitterpunkte eines kartesischen Gitters , das sogenannte Gridding, erfolgt nach der Beziehung

$$S_c(k_n) = \sum_n S(k_j) C(k_n - k_j) \Delta F(k_j) \tag{2}$$

Gleichung 2 stellt die Faltung der mit der Größe $\Delta F(k_j)$ gewichteten Meßwerte $S(k_j)$ mit dem Faltungskernel $C(k_n - k_j)$ dar, wobei der Index n für die Abtastpunkte des kartesischen Gitters steht und der Index j die unregelmäßig verteilten Meßpunkte bezeichnet. $S_c(k_j)$ ist der für den Abtastpunkt $k_n$ ermittelte Wert der Kernmagnetisierungsverteilung im k-Raum.

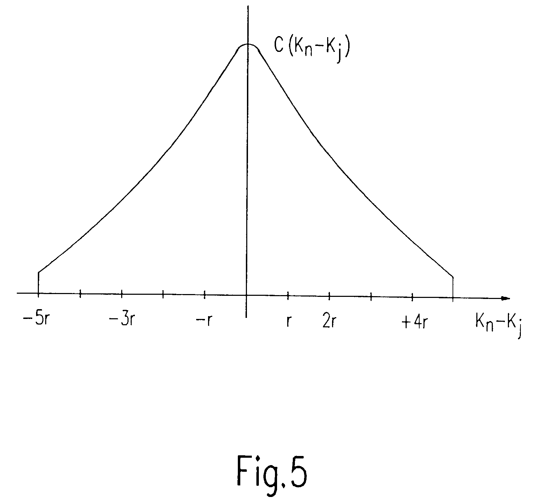

Der Verlauf des Faltungskernels $C(k_n - k_j)$ als Funktion der Differenz $k_n - k_j$ (die als Vektor aufzufassen ist, der im k-Raum den Abtastpunkt $k_n$ mit dem Meßpunkt $k_j$ verbindet) ist in Fig. 5 dargestellt. Der Faltungskernel ist eine symmetrische, glockenförmige Funktion. Für größere Werte der Differenz $k_n - k_j$ hat $C(k_n - k_j)$ den Wert Null. Die Gleichung 1 in Verbindung mit Fig. 5 besagt, daß für die Berechnung eines Abtastwertes $S_c(k_n)$ am Abtastpunkt $k_n$ nur diejenigen Meßwerte $S(k_j)$ herangezogen werden müssen, die innerhalb eines kreisförmigen Fensters um den Abtastpunkt $k_n$ liegen. Anstelle eines kreisförmigen Fensters kann man auch ein quadratisches Fenster wählen, das in Richtung $k_x$ und $k_y$ den in Fig. 5 dargestellten Verlauf hat. Das Fenster kann auch breiter sein als in Fig. 5 dargestellt oder auch schmaler. Ein Fenster mit einer Fensterbreite von 4r bis 6r hat sich aber in der Praxis bewährt. Ein zu großes Fenster benötigt lange Rechenzeiten, ohne das Bild zu verbessern. Ein zu kleines Fenster birgt die Gefahr von Artefakten im Bild als Folge einer zyklischen Rückfaltung.

Gemäß Gleichung (2) wird im Schritt 107 für alle Punkte $k_n$ des kartesischen Gitters die Faltung ausgeführt. Anstatt aber die Summe gemäß Gleichung (2) Gitterpunkt für Gitterpunkt zu berechnen, ist es zweckmäßig, nacheinander für alle Meßwerte bzw. Meßpunkte $k_j$ deren Beitrag zu den Abtastwerten an den Abtastpunkten $k_n$ zu errechnen und diesen zu der Summe der bereits vorhandenen Beiträge von anderen Meßpunkten zu addieren.

Die auf diese Weise aus den Meßwerten der Kernmagnetisierung an den ungleichmäßig verteilten Meßpunkten $k_j$ berechneten Abtastwerte $S_c(k_n)$ an den Abtastpunkten $k_n$ können einer (inversen) Schnellen Fourier-Transformation (FFT) unterzogen werden (Schritt 108), woraus das MR-Bild I(x,y) multipliziert mit der Fourier-Transformierten des Faltungskernels C ($k_n$ - $k_j$) resultiert. Zur Beseitigung dieser Gewichtung des MR-Bildes (mit der Fourier-Transformierten des Kernels C ($k_n$ - $k_j$)) wird die resultierende Verteilung Bildpunkt für Bildpunkt durch die Fourier-Transformierte des Faltungskernels dividiert. Dabei muß sichergestellt sein, daß die Fourier-Transformierte des Faltungskernels im gesamten Bildraum von Null verschieden ist, um eine Division durch den Wert Null zu vermeiden. Dies läßt sich sicherstellen, wenn der Faltungskernel nur in einem vergleichsweise kleinen Fenster von Null verschieden ist - wie zuvor erläutert.

Nach dem Divisionsschritt 109 kann das MR-Bild I(x,y) auf dem Monitor wiedergegeben werden (Schritt 110), wonach das Verfahren beendet ist (Schritt 111).

Die Schritte 107 (Gridding) und 109 (Division durch die Fourier-Transformierte des Faltungskernels) können im Prinzip entfallen, wenn anstelle der Schnellen Fourier-Transformation im Schritt 108 eine diskrete Fourier-Transformation über die an ungleichmäßig verteilten Meßpunkten erfaßten Meßwerten durchgeführt wird. Allerdings dauert das Verfahren dann erheblich länger.

Es ist auch möglich die Schritte 104 bis 110 auf einen dreidimensional im k-Raum verteilten Satz von Meßwerten $S(k_j)$ anzuwenden. Die im zweidimensionalen Fall polygonförmigen Voronoi-Zellen haben dann die Form von Polyedern und die Meßwerte $S(k_j)$ müssen dann mit dem Rauminhalt dieser Polyeder gewichtet werden.

**Patentansprüche**

1. Bildgebendes Verfahren für medizinische Untersuchungen mit den Schritten

   - Akquisition eines Satzes von Meßwerten an im Frequenzraum verteilten Meßpunkten ($k_j$)
   - Wichtung der Meßwerte ($S(k_j)$) in Abhängigkeit von der Dichte der Meßpunkte,
   - Erzeugung eines Bildes im Ortsraum durch Anwendung einer Fourier-Transformation auf die gewichteten Meßwerte des Satzes,

   dadurch gekennzeichnet, daß die Wichtung der Meßwerte entsprechend der Größe ($\Delta F(k_j)$) der den Meßwerten zugeordneten Meßpunkte umschließenden Voronoi-Zellen erfolgt.

2. Bildgebendes Verfahren nach Anspruch 1,
   gekennzeichnet durch folgende Schritte:

   - Anwendung eines Faltungsoperators ($C(k_n-k_j)$ auf die Meßwerte ($S(k_j)$) zur Bestimmung interpolierter Werte ($S(k_n)$) an den Gitterpunkten ($k_n$) eines kartesischen Gitters
   - Anwendung einer Schnellen Fourier-Transformation auf den mit der Faltung beaufschlagten Satz von Meßwerten von zur Erzeugung eines Bildes,
   - Kompensation der durch die Faltung bewirkten Modulation der den einzelnen Bildpunkten dieses Bildes zugeordneten Bildwerte.

3. Bildgebendes Verfahren nach Anspruch 1,
   gekennzeichnet durch folgende Schritte:

   - Definition synthetischer, im Frequenzraum außerhalb des Meßbereichs befindlicher Abtastpunkte ($k_s$), deren Lage im Bezug auf die außen liegenden Meßpunkte ($k_a$) aus der Lage dieser Meßpunkte im Bezug auf die ihnen nach innen hin benachbarten Meßpkunkte ($k_i$) abgeleitet wird,
   - Ableitung der äußeren Begrenzung der die äußeren Meßpunkte umschließenden Voronoi-Zellen unter Heranziehung der Abtastpunkte.

4. Bildgebendes MR-Verfahren nach Anspruch 1,
   gekennzeichnet durch folgende Schritte:

- Erzeugung mindestens einer Sequenz zur Anregung der Kernmagnetisierung in einem Untersuchungsbereich,
- Empfangen der dabei im Untersuchungsbereich erzeugten MR-Signale
- Diskretisierung und Fouriertransformation zur Gewinnung der Meßwerte in Frequenzraum

5. MR-System zur Ausführung des Verfahrens nach Anspruch 4, mit

- einem Hauptfeldmagneten (1) zur Erzeugung eines homogenen stationären Magnetfeldes,
- Gradienten-Spulenanordnungen (2...4) zur Erzeugung von magnetischen Gradientenfeldern mit in unterschiedlichen Richtungen verlaufenden Gradienten
- einer Hochfrequenzspulenanordnung (10) zum Anregen der Kernmagnetisierung in einer Schicht eines Untersuchungsbereiches durch wenigstens einen Hochfrequenzimpuls,
- einem Empfänger (20) zum Erfassen der im Untersuchungsbereich erzeugten MR-Signale,
- Mitteln zum Diskretieren der MR-Signale,
- einer Rekonstruktionseinheit (24) zur Rekonstruktion der Kernmagnetisierungsverteilung im Untersuchungsbereich aus den MR-Signalen, mit Mitteln zur Durchführung einer ersten Fouriertransformation zur Gewinnung von MR-Meßwerten im Frequenzraum

dadurch gekennzeichnet, daß die Rekonstruktioneinheit versehen ist mit

- Mitteln zur Wichtung der Meßwerte entsprechend der Größe der die einzelnen Meßpunkte umschließenden Voronoi-Zellen und
- Mitteln zur Erzeugung eines Bildes im Ortsraum durch Anwendung einer Fourier-Transformation auf die gewichteten Meßwerte des Satzes.

Fig.1

EP 0 944 025 A2

Fig.2

Fig.3

Fig.4

Fig.5